**Europäisches Patentamt**

**European Patent Office**

**Office européen des brevets**

(19)

(11) Veröffentlichungsnummer: **0 208 158**
**A1**

(12) # EUROPÄISCHE PATENTANMELDUNG

(21) Anmeldenummer: 86107999.4

(22) Anmeldetag: 12.06.86

(51) Int.Cl.⁴: **A 61 C 5/06**
**A 61 C 9/00**

(30) Priorität: 25.07.85 DE 8521514 U

(43) Veröffentlichungstag der Anmeldung:
14.01.87 Patentblatt 87/3

(84) Benannte Vertragsstaaten:
CH DE FR GB IT LI

(71) Anmelder: Mühlbauer, Ernst
Fangdieckstrasse 61
D-2000 Hamburg 53(DE)

(72) Erfinder: Mühlbauer, Ernst
Fangdieckstrasse 61
D-2000 Hamburg 53(DE)

(74) Vertreter: Glawe, Delfs, Moll & Partner Patentanwälte
Postfach 26 01 62 Liebherrstrasse 20
D-8000 München 26(DE)

(54) **Vorrichtung zum dosierten Ausbringen von Dentalmasse.**

(57) Vorrichtung zum dosierten und gezielten Ausbringen von Dentalmasse mit einer die Dentalmasse enthaltenden Patrone (1), die am einen Ende eine Ausbringdüse (2) aufweist und am anderen Ende mit einer Mutter (3) mit Innengewinde drehfest verbunden ist, einem Kolben in der Patrone zum Ausschieben der Dentalmasse aus der Düse (2), einer mit der Mutter (3) zusammenwirkenden Gewindespindel (4) zum Vortreiben des Kolbens durch Relativdrehung der Patrone (1) und der Spindel (4) sowie mit einer mit der Spindel drehfest verbundenen Handhabe (6). Zur Vereinfachung der Konstruktion und der Handhabung ist erfindungsgemäß vorgesehen, daß die Handhabe ausschließlich mit der Spindel axial fest und drehfest verbunden ist, wobei die Ausbringdüse koaxial zu dem Innengewinde der Mutter angeordnet ist und die Handhabe einen pistolengriffartig seitlich von der Patrone abstehenden Griffteil (8) hat.

Fig.1

Beschreibung

Die Erfindung bezieht sich auf eine Vorrichtung zum dosierten und gezielten Ausbringen von Dentalmasse mit einer die Dentalmasse enthaltenden Patrone, die an einem Ende eine Ausbringdüse aufweist und am anderen Ende mit einer Mutter mit Innengewinde drehfest verbunden ist, einem Kolben in der Patrone zum Ausschieben der Dentalmasse aus der Düse, einer mit der Mutter zusammenwirkende Gewindespindel zum Vortreiben des Kolbens durch Relativdrehung der Patrone und der Spindel sowie mit einer mit der Spindel drehfest verbundenen Handhabe.

Bei einer bekannten Vorrichtung (DE-PS 27 41 185) ist die Mutter am hinteren Ende der Patrone drehbar angeordnet und die Patrone weist vor der Mutter einen Flansch auf, so daß das Gerät gehalten werden kann zwischen Zeige- und Mittelfinger einerseits, die die Patrone vor dem Flansch fassen, und dem Handballen, gegen den die Handhabe der Spindel durch die genannten Finger gedrückt wird, wobei der Daumen frei bleibt zum Drehen an der Mutter. Die Patrone und die Spindel werden während der Benutzung ungedreht festgehalten; lediglich die Mutter wird gedreht. Stationäre Lage der Patrone ist erforderlich, weil die Ausbringdüse gekrümmt an ihr angesetzt ist. Der Aufbau dieses bekannten Geräts ist recht aufwendig. Auch die Benutzung ist nachteilig, weil für die Drehbewegung nur der Daumen zur Verfügung steht, der unter seitlichem Druck an der Mutter anliegt und daher das Zielen mit der Ausbringdüse erschwert.

Bei einem anderen bekannten Gerät (DE-A 32 12 187 = EP-A-0090961) ist die Mutter fest mit der Patrone verbunden, wobei die Düse koaxial zur Patrone angeordnet ist. Die Handhabe ist einerseits mit dem Gehäuse drehbar aber axial fest und andererseits mit der Spindel undrehbar aber axial verschiebbar verbunden. Während das Gerät an der Handhabe zwischen Mittelfinger, Ringfinger und kleinem Finger sowie dem Handballen gehalten werden kann, kann die Patrone mittels Daumen und Zeigefinger zum Aufbringen der Masse gedreht werden. - Es ist konstruktiv nicht einfach, die Handhabe axial fest aber drehbar mit dem Gehäuse und andererseits undrehbar aber axial verschiebbar mit der Spindel zu verbinden. Der erläuterte Konstruktionsgedanke mußte daher so modifiziert werden (DE-A 32 40 785 = EP-A-0090961), daß der Gesamtaufbau verhältnismäßig kompliziert wird.

Weiter ist eine Dosierspritze für Dentalzwecke bekannt, deren Kolben fest mit einer Gewindespindel verbunden ist, die ihrerseits durch eine drehbar am hinteren Ende des Zylinders vorgesehenen Mutter vorgeschoben werden kann. Diese Spritze kann nur mit zwei Händen benutzt werden, weil nicht gleichzeitig mit einer und derselben Hand der Spritzenkörper gehalten und die Mutter gedreht werden kann (DE-A-31 29 348).

Schließlich ist eine Spritze für das Ausbringen irgendwelcher plastischer Massen ohne Bezug auf Dentalanwendung bekannt, bei der die zum Vortreiben des Kolbens im Spritzenzylinder vorgesehene Spindel durch eine am hinteren Ende des Spritzenkörpers drehfest vorgesehene Mutter hindurchgeführt ist und am Ende
einen Handgriff aufweist. Zum Ausbringen der Masse kann der
Spritzenzylinder mit einer Hand gehalten werden, während mit
der anderen Hand der Griff an der Spindel gedreht wird
(FR-U-23 47 856). Von einer einhändigen Bedienung ist nicht
die Rede; sie ist auch nicht möglich, weil die dargestellte
Spritze ihrer Art nach zu groß ist, als daß sie in einer Hand
gehalten und betätigt werden könnte.

Der Erfindung liegt daher die Aufgabe zugrunde, eine Vorrichtung der eingangs genannten Art zu schaffen, die sehr
einfach aufgebaut und dennoch leicht handhabbar ist.

Die erfindungsgemäße Lösung besteht darin, daß die Handhabe
ausschließlich mit der Spindel fest verbunden ist, und zwar
nicht nur drehfest, sondern auch axial fest, wobei die Ausbringdüse koaxial zu dem Innengewinde der Mutter angeordnet
ist, und daß die Handhabe einen pistolengriffartig seitlich
von der Patrone abstehenden Griffteil hat.

Überraschenderweise hat sich gezeigt, daß die Patrone durch
die Spindel hinreichend sicher gehalten wird, auch wenn die
Handhabe ausschließlich mit der Spindel verbunden ist und
keine unmittelbaren Haltekräfte auf die Patrone ausüben kann.
Ferner ist überraschend, daß sich die Distanzänderung, die
sich bei fortschreitendem Eindrehen der Spindel in die Patrone
einstellt, nicht nachteilig auf die Handhabbarkeit auswirkt.
Das liegt daran, daß der Distanzunterschied verhältnismäßig
gering ist im Bereich mit den Stellungsunterschieden, an die
die geübte Hand bei der Benutzung unterschiedlicher Geräte
ohnehin gewöhnt ist.

Man gelangt auf diese Weise zu einem Gerät, daß äußerlich nur
aus der Patrone, der Spindel und der Handhabe besteht, wobei keinerlei Schiebe- oder Drehverbindungen zwischen der Handhabe und einem anderen Geräteteil vorgesehen werden muß. Vielmehr genügt eine einfache feste, wenn auch zweckmäßigerweise lösbare Verbindung zwischen der Handhabe und der Spindel.

Vorzugsweise weist die Spindel ein erstes, quergerichtetes Steckverbindungselement auf, das mit einem an der Handhabe fest vorgesehenen, zweiten Steckverbindungselement fest verbindbar ist. Dabei hat der Griffteil der Handhabe eine von der Richtung der Längsachse des zweiten Steckverbindungselements abweichende Richtung. Die beiden Steckverbindungselemente sind in zwei Positionen zusammensteckbar. In der ersten dieser Positionen erstreckt sich der Griffteil der Handhabe im wesentlichen seitlich von der Spindel, während er in der anderen der beiden Positionen im wesentlichen hinter der Spindel gelegen ist. Dies gibt dem Benutzer die Freiheit, die Handhabe so an der übrigen Vorrichtung anzubringen, wie es ihm für die Handhabung am bequemsten erscheint. Solange die Patrone noch voll ist und die Spindel daher weit hinten über die Patrone hinausragt, ist es oft zweckmäßig, die Handhabe in derjenigen Position anzubringen, in der sie sich im wesentlichen seitlich von der Spindel befindet, während dann, wenn die Patrone nahezu entleert ist und daher die Spindel nur noch wenig hinten über die Patrone hinausgeht, sich die andere Position empfiehlt, die auch für größere Hände geeignet ist.

Die Länge der Handhabe soll nicht geringer sein als die Länge der Patrone. Eher soll sie etwas größer sein.

Die Erfindung wird im folgenden näher unter Bezugnahme auf die Zeichnung erläutert, die ein vorteilhaftes Ausführungsbeispiel schematisch in Seitenansichten veranschaulicht. Darin zeigen:

Fig. 1          die Anordnung mit der Handhabe in der hinteren Steckstellung und

Fig. 2          die Anordnung mit der Handhabe in der
                vorderen Steckstellung.

Die Patrone (1) trägt an ihrem vorderen Ende die Ausbringdüse
(2) und an ihrem hinteren Ende fest mit dem übrigen Patronenkörper verbunden die Mutter (3) mit Innengewinde, in der die
Spindel (4) verschraubbar ist, um einen in der Zeichnung nicht
dargestellten Kolben im Innern der Patrone (1) vorzuschieben
und dadurch die Dentalmasse aus der Düse (2) auszupressen. Die
Spindel (4) trägt an ihrem hinteren Ende ein erstes Steckverbindungselement (5) in Gestalt eines Querbalkens mit quadratischem Querschnitt, der auch als solcher zum Vordrehen der
Spindel (4) benutzt werden kann, was allerdings die Benutzung
von zwei Händen verlangt. Am einen Ende des ersten Steckverbindungselements (5) ist die Handhabe (6) lösbar befestigt.
Sie weist an ihrem Ende als zweites Steckverbindungselement
eine Muffe (7) auf, die eine quadratische Bohrung passend zum
Querschnitt des ersten Steckverbindungselement aufweist und
einfach auf eines von dessen Enden aufgesteckt wird. Selbstverständlich ist jegliche andere Art von lösbarer Verbindung
zwischen der Handhabe (6) und der Spindel (5) anwendbar.

Die Handhabe (6) ist ein wenig gebogen, so daß die Hauptrichtung ihres Griffteils von der Richtung des Steckelements
(5) abweicht. Sie steht etwa pistolengriffartig von der
Patrone (1) ab.

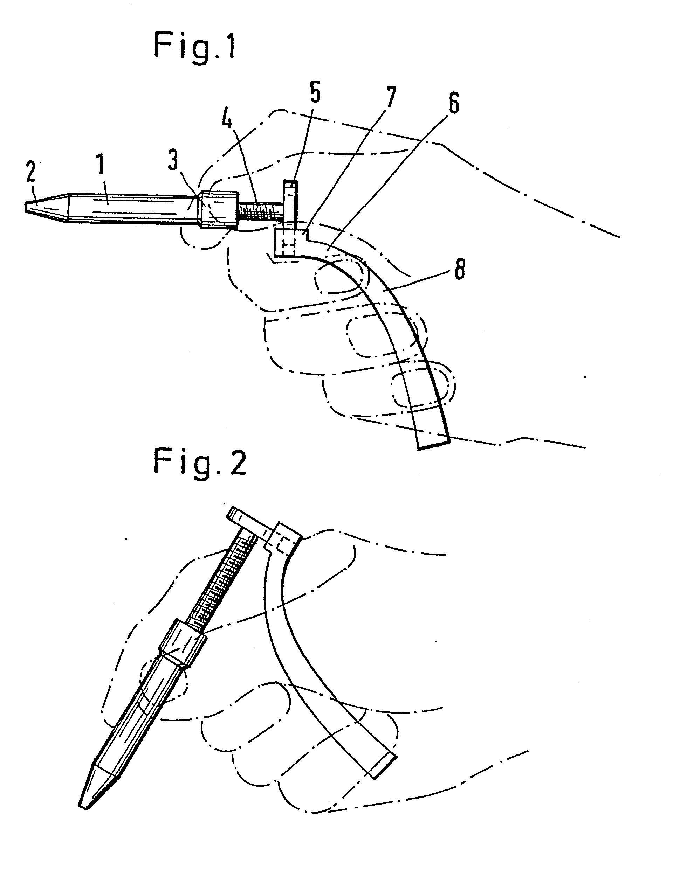

Die Handhabe (6) wird in der Position gemäß Fig. 1 dann benutzt, wenn der Benutzer eine große Hand hat oder wenn die
Spindel (4) schon weit in die Patrone (1) eingedreht ist oder
wenn die besondere gewünschte Stellung der Patrone zur Hand
dies zweckmäßig erscheinen läßt. Stattdessen kann in Ausnahme-

0208158

fällen auch die Position gemäß Fig. 2 gewählt werden, wenn der
Benutzer eine kleine Hand hat oder die Spindel noch sehr weit
aus der Patrone hervorsteht oder eine besondere Benutzungslage
der Patrone gegenüber der Handrichtung erwünscht ist.

Das Gerät wird so gegriffen, wie es ungefähr mit strichpunktierten Linien angedeutet ist, wobei die Handhabe (6) mit
Mittelfinger, Ringfinger und kleinem Finger gehalten wird,
während Zeigefinger und Daumen zum Drehen der Patrone (1) bzw.
der Mutter (3) zur Verfügung stehen und gleichzeitig das
Zielen leicht übernehmen können.

0208158

Ernst Mühlbauer

Vorrichtung zum dosierten
Ausbringen von Dentalmasse

Patentansprüche

1. Vorrichtung zum dosierten und gezielten Ausbringen von
Dentalmasse mit einer die Dentalmasse enthaltenden Patrone
(1), die am einen Ende eine Ausbringdüse (2) aufweist und
am anderen Ende mit einer Mutter (3) mit Innengewinde drehfest verbunden ist, einem Kolben in der Patrone zum Ausschieben der Dentalmasse aus der Düse (2), einer mit der
Mutter (3) zusammenwirkenden Gewindespindel (4) zum Vortreiben des Kolbens durch Relativdrehung der Patrone (1)
und der Spindel (4) sowie mit einer mit der Spindel (4)
drehfest verbundenen Handhabe (6), dadurch gekennzeichnet,
daß die Handhabe (6) ausschließlich mit der Spindel (4)
axial fest und drehfest verbunden, wobei die Ausbringdüse
koaxial zu dem Innengewinde der Mutter (3) angeordnet ist,
und daß die Handhabe einen pistolengriffartig seitlich von
der Patrone abstehenden Griffteil (8) hat.

2. Vorrichtung nach Anspruch 1, dadurch gekennzeichnet, daß die Handhabe (6) lösbar mit der Spindel (4) verbunden ist.

3. Vorrichtung nach Anspruch 1 oder 2, dadurch gekennzeichnet, daß die Spindel ein erstes quer gerichtetes Steckverbindungselement (5) aufweist, das mit einem an der Handhabe fest vorgesehenen, zweiten Steckverbindungselement (7) verbindbar ist, daß der Griffteil (8) der Handhabe eine von der Richtung der Längsachse des zweiten Steckverbindungselements (7) abweichende Richtung hat und daß das zweite Steckverbindungselement (7) in zwei Positionen auf das erste Steckverbindungselement (5) aufsteckbar ist, wobei der Griffteil (8) in der einen dieser Positionen im wesentlichen seitlich von der Spindel (4) und in der anderen im wesentlichen hinter der Spindel (4) gelegen ist.

4. Vorrichtung nach einem der Ansprüche 1 bis 3, dadurch gekennzeichnet, daß die Länge des Griffteils (8) der Länge der Patrone (1) mindestens etwa gleicht.

Fig.1

Fig.2

0208158

### Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | FR-A-2 347 856 (A. FISCHBACH) * Figur 1; Seite 3, Zeile 9 - Seite 4 * | 1 | A 61 C 5/06 <br> A 61 C 9/00 |
| D,A | DE-B-2 741 185 (ET. DENTAIRE IVOCLAR) | | |
| D,A | EP-A-0 090 961 (ESPE FABRIK) <br> & DE - A - 3 212 187, & DE - A - 3 240 785 | | |

**RECHERCHIERTE SACHGEBIETE (Int. Cl.4)**

A 61 C
B 05 C

Der vorliegende Recherchenbericht wurde für alle Patentansprüche erstellt.

| Recherchenort | Abschlußdatum der Recherche | Prüfer |
|---|---|---|
| DEN HAAG | 22-09-1986 | DEUTSCH J.P.M. |